# EUROPÄISCHE PATENTANMELDUNG

(11) **EP 1 834 972 A1**
(43) Veröffentlichungstag der Anmeldung: **19.09.2007**
(21) Anmeldenummer: 07005563.7
(22) Anmeldetag: 19.03.2007
(51) Int. Cl.: C08G 18/12, C08G 18/48, C08G 18/71

(54) **Herstellung lagerstabiler, isocyanat-funktioneller Prepolymere unter Verwendung NCO-funktioneller Carbonsäure- und Carbamoylhalogenide**

(30) Priorität: 18.03.2006 DE 102006015280
(71) Anmelder: Bayer MaterialScience AG, 51368 Leverkusen (DE)
(72) Erfinder: Köhler, Burkhard, Dr., 51373 Leverkusen (DE); Hofacker, Steffen, Dr., 51519 Odenthal (DE)

(57) **Zusammenfassung**

Die Erfindung betrifft lagerstabile isocyanat-funktionelle Prepolymere, ein Verfahren zur Herstellung, sowie ihre Verwendung als Ausgangskomponente bei der Herstellung von Polyurethankunststoffen, von Lacken und Beschichtungen, von Kleb- und von Dichtstoffen.

## Beschreibung

Die Erfindung betrifft lagerstabile isocyanat-funktionelle Prepolymere, ein Verfahren zur Herstellung, sowie ihre Verwendung als Ausgangskomponente bei der Herstellung von Polyurethankunststoffen, Lacken, Beschichtungen, sowie Kleb- und Dichtstoffen.

In der Polyurethanchemie versteht man unter isocyanat-funktionellen Prepolymeren (oligomere) Urethane mit mindestens einer freien Isocyanatgruppe. Bekanntlich sind diese Verbindungen durch die Umsetzung von Polyisocyanaten mit Polyolen in einem Aquivalentverhältnis der NCO- zu den OH-Gruppen von ≥ 2:1 erhältlich.

Solche Prepolymere stellen wichtige Bausteine für die Vernetzung mit Polyolen oder Aminen bei der Herstellung Polyurethan- oder Polyhamstoff-basierender Lacke, Beschichtungen, Dicht- und Klebstoffe dar. Ebenso sind isocyanatfunktionelle Prepolymere für feuchtigkeitshärtende 1 K-Systeme von besonderem Interesse. Nach Applikation findet unter Einfluss von Luftfeuchtigkeit Vernetzung unter Bildung von Harnstoffgruppen statt.

Wünschenswert, sowohl für die Verwendung in 2 K-, besonders aber für die Verwendung in feuchtigkeitshärtenden 1 K-Systemen, ist eine hohe Lagerstabilität der NCO-Prepolymere. Unter Lagerstabilität versteht man in diesem Zusammenhang eine hohe Hydrolysestabilität über die gesamte Lagerzeit hinweg, das heißt also einen geringen Verlust an freien NCO-Gruppen und damit einhergehend eine möglichst geringe Viskositätszunahme während dieser Zeit.

US-B 3 183 112 beschreibt die Herstellung von isocyanat-funktionellen Prepolymeren durch Umsetzung eines ethergruppenhaltigen Polyols mit Molmassen von 196 bis 12000 g/mol mit der mindestens doppel-äquivalenten Menge an Diisocyanat. Die sich anschließende Aufarbeitung zur notwendigen Restmonomerabtrennung erfolgt durch Dünnschichtdestillation. Die Produkte sind jedoch oft nicht lagerstabil, sondern unterliegen einem Isocyanatabbau, der mit einer Viskositätssteigerung einhergeht.

Die Stabilisierung solcher Prepolymere mit Titantetrachlorid wird in der US-B 3 723 394 beschrieben. Dabei verbleiben Titanverbindungen nach Dünnschichten im Prepolymer und erhöhen durch ihre katalytische Wirkung die Reaktivität der Isocyanatgruppen und durch ihre photokatalytische Wirkung die UV-Anfälligkeit der resultierenden Polyurethane. Zudem bedingen bei der Lagerung entstehende Titanhydroxide und -oxide eine unerwünschte Trübung der Produkte.

US-B 4 738 991 beschreibt lagerstabile allophanatgruppen-tragende Polyisocyanate, bei denen die Stabilisierung durch aliphatische, aromatische oder anorganische Säurechloride erfolgt. Nachteilig ist die hohe Flüchtigkeit der Stabilisatoren, wodurch sie bei der Dünnschichtung leicht mit entfernt werden.

Die Aufgabe der vorliegenden Erfindung bestand in der Bereitstellung isocyanat-funktioneller Prepolymere, die lagerstabil sind, d.h. keinen signifikanten Viskositätsanstieg während der Lagerzeit zeigen und die Nachteile des Standes der Technik nicht aufweisen.

Es wurde nun gefunden, dass die zugrunde liegende Aufgabe gelöst wird, indem man zur Stabilisierung NCO-funktionelle Carbonsäure- oder Carbamoylhalogenide bei der Prepolymerherstellung mit einsetzt. Diese bauen über die NCO-Gruppe in das Prepolymer ein und können so nicht mehr abdestilliert werden.

Gegenstand der Erfindung sind daher isocyanat-funktionelle Prepolymere enthaltend wenigstens eine Struktureinheit der allgemeinen Formel (I) oder (II) 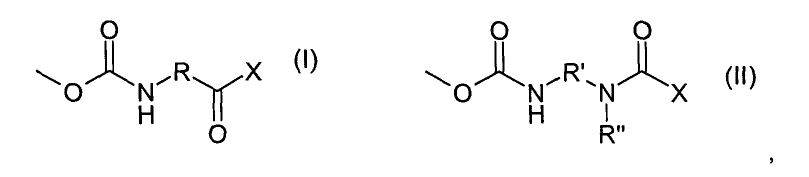 wobei
- R und R': unabhängig voneinander ein C₁- bis C₁₂-Alkylen-, ein C₅- bis C₁₂-Cycloalkylen- oder ein ggf. heteroatomhaltiger, aromatischer Kohlenwasserstoffrest mit 6 bis 22 C-Atomen sind,
- R": ein C₁- bis C₁₂-Alkyl-, ein C₅- bis C₁₂-Cycloalkyl-, oder ein ggf. heteroatomhaltiger, aromatischer Kohlenwasserstoffrest mit 6 bis 22 C-Atomen ist, und
- X: ein Halogenatom ist.

Bevorzugt sind R und R' o-, m-, oder p-Phenylenreste, ein 1,5-Pentylenrest oder 2,4- oder 2,6-Toluylenreste.

Bevorzugt ist R" ein C1 bis C4-Alkylrest.

Bevorzugt ist X = Cl.

Die erfindungsgemäßen Isocyanatprepolymere können selbstverständlich auch Struktureinheiten beider Formeln (I) und (II) enthalten.

Ein weiterer Gegenstand der Erfindung ist ein Verfahren zur Herstellung der erfindungsgemäßen Prepolymere, bei dem
a) ein oder mehrere Polyisocyanate mit
b) einem oder mehreren Polyolen in Anwesenheit von
c) wenigstens einem Isocyanatocarbonsäure- oder Isocyanatocarbamoylhalogenid der allgemeinen Formel (III) bzw. (IV) 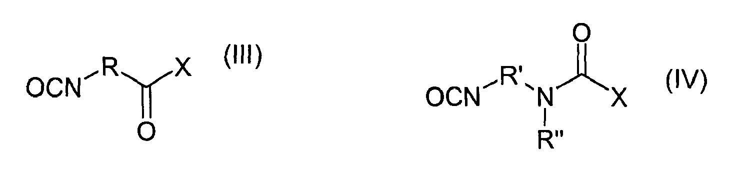 umgesetzt wird,
wobei R, R', R" und X die bereits vorstehend definierten Bedingungen erfüllen.

Als geeignete Polyisocyanate der Komponente a) finden die dem Fachmann an sich bekannten aromatischen, araliphatischen, aliphatischen oder cycloaliphatischen Polyisocyanate einer NCO-Funktionalität von bevorzugt ≥ 2 Verwendung. Diese können auch Iminooxadiazindion-, Isocyanurat-, Uretdion-, Urethan-, Allophanat-, Biuret-, Harnstoff-, Oxadiazintrion, Oxazolidinon-, Acylharnstoff- und/oder Carbodiimid-Strukturen aufweisen.

Die vorstehend genannten Polyisocyanate basieren dabei auf dem Fachmann an sich bekannten Di- bzw. Triisocyanaten mit aliphatisch, cycloaliphatisch, araliphatisch und/oder aromatisch gebundenen Isocyanatgruppen, wobei es unerheblich ist, ob diese unter Verwendung von Phosgen oder nach phosgenfreien Verfahren hergestellt wurden. Beispiele für solche Di- bzw. Triisocyanate sind 1,4-Diisocyanatobutan, 1,5-Diisocyanatopentan, 1,6-Diisocyanatohexan (HDI), 2-Methyl-1,5-diisocyanatopentan, 1,5-Diisocyanato-2,2-dimethylpentan, 2,2,4- bzw. 2,4,4-Trimethyl-1,6-diisocyanatohexan, 1,10-Diisocyanatodecan, 1,3- und 1,4-Diisocyanatocyclohexan, 1,3- und 1,4-Bis-(isocyanatomethyl)-cyclohexan, 1-Isocyanato-3,3,5-trimethyl-5-isocyanatomethylcyclo-hexan (Isophorondiisocyanat, IPDI), 4,4'-Diisocyanatodicyclohexylmethan (Desmodur^{®} W, Bayer AG, Leverkusen, DE), 4-Isocyanatomethyl-1,8-octandüsocyanat (Triisocyanatononan, TIN), ω,ω'-Diisocyanato-1,3-dimethylcyclohexan (H₆XDI), 1-Isocyanato-1-methyl-3-isocyanato-methylcyclohexan, 1-Isocyanato-1-methyl-4-isocyanato-methylcyclohexan, Bis-(isocyanatomethyl)-norbornan, 1,5-Naphthalen-diisocyanat, 1,3- und 1,4-Bis-(2-isocyanato-prop-2-yl)-benzol (TMXDI), 2,4- und 2,6-Diisocyanatotoluol (TDI) insbesondere das 2,4 und das 2,6-Isomere und technische Gemische der beiden Isomeren, 2,4'- und 4,4'-Diisocyanatodiphenylmethan (MDI), 1,5-Diisocyanatonaphthalin, 1,3-Bis(isocyanato-methyl)benzol (XDI) sowie beliebige Mischungen genannter Verbindungen.

Besonders bevorzugt weisen die Polyisocyanate der Komponente a) dabei eine mittlere NCO-Funktionalität von 2,0 bis 5,0, ganz besonders bevorzugt von 2,3 bis 4,5 und bevorzugt einen Gehalt an Isocyanatgruppen von 5,0 bis 27,0 Gew.-%, besonders bevorzugt von 14,0 bis 24,0 Gew.-% und vorzugsweise einen Gehalt an monomeren Diisocyanaten von weniger als 1 Gew.-%, besonders bevorzugt weniger als 0,5 Gew.-% auf.

Bevorzugt werden in Komponente a) Polyisocyanate oder Polyisocyanatgemische der vorstehend genannten Art mit ausschließlich aliphatisch und/oder cycloaliphatisch gebundenen Isocyanatgruppen eingesetzt.

Besonders bevorzugt basieren die Polyisocyanate der vorstehend genannten Art auf Hexamethylendiisocyanat, Isophorondiisocyanat, den isomeren Bis-(4,4'-isocyanatocyclohexyl)methanen, TDI, MDI, sowie deren Mischungen.

Als geeignete Polyole der Komponente b) können alle dem Fachmann aus der Polyurethanchemie an sich bekannten Polyole eingesetzt werden, welche bevorzugt eine mittlere OH-Funktionalität ≥ 1,5, besonders bevorzugt von 1,8 bis 2,5 aufweisen.

Dies können beispielsweise niedermolekulare Diole (z.B. 1,2-Ethandiol, 1,3- bzw. 1,2-Propandiol, 1,4-Butandiol), Triole (z.B. Glycerin, Trimethylolpropan) und Tetraole (z.B. Pentaerythrit), Polyetherpolyole, Polyesterpolyole, Polyacrylatpolyole sowie Polycarbonatpolyole sein. Bevorzugte Polyole sind Substanzen der vorstehend genannten Art auf Polyetherbasis.

Bei Verwendung von Polyetherpolyolen in Komponente b) werden Polyetherpolyole eines zahlenmittleren Molekulargewichte Mₙ von bevorzugt 300 bis 20000 g/mol, besonders bevorzugt 1000 bis 12000 g/mol, ganz besonders bevorzugt 2000 bis 6000 g/mol eingesetzt.

Ferner besitzen sie bevorzugt eine mittlere OH-Funktionalität von ≥ 1,9, besonders bevorzugt ≥ 1,95.

Die OH-Funktionalität dieser Polyether ist dabei bevorzugt < 6, besonders bevorzugt < 4, ganz besonders bevorzugt < 2,2.

Solche Polyetherpolyole sind in an sich bekannter Weise durch Alkoxylierung von geeigneten Starter-Molekülen unter Basenkatalyse oder durch Einsatz von Doppelmetallcyanidverbindungen (DMC-Verbindungen) zugänglich.

Besonders bevorzugte Polyetherpolyole der Komponente b) sind solche der vorstehend genannten Art mit einem Gehalt an ungesättigten Endgruppen von kleiner oder gleich 0,02 Milliäquivalenten pro Gramm Polyol (meq/g), bevorzugt kleiner oder gleich 0,015 meq/g, besonders bevorzugt kleiner oder gleich 0,01 meq/g (Bestimmungsmethode ASTM D2849-69).

Solche Polyetherpolyole haben dabei eine besonders enge Molekulargewichtsverteilung, d.h. eine Polydispersität (PD = M_{w}/Mₙ) von 1,0 bis 1,5 und/oder eine OH-Funktionalität ≥ 1,9. Bevorzugt weisen die genannten Polyetherpolyole eine Polydispersität von 1,0 bis 1,5 und eine OH-Funktionalität von größer 1,9 auf, besonders bevorzugt größer oder gleich 1,95 auf.

Derartige Polyetherpolyole sind in an sich bekannter Weise durch Alkoxylierung von geeigneten, bevorzugt di-funktionellen Starter-Molekülen, insbesondere unter Verwendung von Doppelmetallcyanid-Katalysatoren (DMC-Katalyse) herstellbar. Dies ist z.B. in der US-A 5 158 922 (z.B. Beispiel 30) und EP-A 0 654 302 (S. 5, Z. 26 bis S. 6, Z. 32) beschrieben.

Für die Alkoxylierung geeignet sind cyclische Ether wie Tetrahydrofuran, Ethylenoxid, Propylenoxid, Butylenoxid, Styroloxid oder Epichlorhydrin, die in beliebiger Reihenfolge oder auch im Gemisch bei der Alkoxylierung eingesetzt werden können. Bevorzugt für die Alkoxylierung sind Ethylenoxid, Propylenoxid und Tetrahydrofuran (THF).

Geeignete Starter-Moleküle für die Herstellung von Polyetherpolyolen sind beispielsweise einfache, niedermolekulare Polyole, Wasser, organische Polyamine mit mindestens zwei N-H-Bindungen oder beliebige Gemische derartiger Starter-Moleküle.

Bevorzugte Starter-Moleküle zur Herstellung von Polyetherpolyolen durch Alkoxylierung, insbesondere nach dem DMC-Verfahren, sind einfache Polyole wie Ethylenglykol, 1,3-Propylenglykol und 1,4-Butandiol, 1,6-Hexandiol, Neopentylglykol, 2-Ethylhexandiol-1,3, Glyzerin, Trimethylolpropan, Trimethylolethan, Pentaerythrit sowie niedermolekulare, Hydroxylgruppen aufweisende Ester derartiger Polyole mit Dicarbonsäuren oder niedermolekulare Ethoxylierungs- oder Propoxylierungsprodukte derartiger einfacher Polyole oder beliebige Gemische derartiger Polyhydroxyverbindungen.

Besonders bevorzugte Starter sind di-funktionelle Alkohole der vorstehend genannten Art.

Ebenfalls geeignet als Verbindungen der Komponente b) sind Polyesterpolyole aus der Kondensationsreaktion geeigneter Alkohole und Säuren. Als Alkohole finden hier primäre und diprimäre Diole, wie Ethylenglycol, Diethylenglycol, Triethylenglycol, 1,2-Propylenglycol, Dipropylenglycol, 1,3-Butandiol, 1,4-Butandiol, 1,6-Hexandiol oder Neopentylglycol, sowie höherwertige Alkohole, wie Trimethylolpropan, Trimethylolethan oder Pentaerythrit Anwendung. Geeignete Kondensationspartner sind Säurekomponenten wie die Adipinsäure oder die Phthalsäuren. Auch die ringöffnende Polymerisation von ε-Caprolacton oder Methyl-e-Caprolacton unter Verwendung von Metall-Katalysatoren wie z.B. Sn-II-ethylhexanoat oder Titantetraalkoxylaten und Diolen oder Triolen der oben genannten Art als Startern führt zu geeigneten Polyesterpolyolen der Komponente b). Dabei kann die Länge des Polyesterpolyols durch die Zahl der verwendeten Caprolacton-Einheiten bestimmt werden.

Das bevorzugte Molekulargewicht der Polyesterpolyole (Zahlenmittel) beträgt ≤ 1000 g/mol. Die bevorzugte Funktionalität der Polyesterpolyole beträgt 2 bis 3.

Auch Polyacrylatpolyole sind für die Herstellung der erfindungsgemäßen Prepolymere der Komponente b) geeignet. Die Polyacrylatpolyole haben ein zahlenmittleres Molekulargewicht von 200 bis 10000 g/mol, besonders bevorzugt 200 bis 6000 g/mol und ganz besonders bevorzugt von 200 bis 2500 g/mol. Die Funktionalität der eingesetzten Polyacrylatpolyole beträgt bevorzugt 1,6 bis 3,8, besonders bevorzugt 1,8 bis 3,5. Die OH Zahl dieser Polyacrylatpolyole beträgt bevorzugt 15 bis 150, besonders bevorzugt 20 bis 100 und ganz besonders bevorzugt 40 bis 80 mg KOH/g. Geeignet sind z.B. Acryflow^{®} P60 und P90 (Handelsprodukte der Fa. Lyondell, US).

Auch aliphatische Polycarbonatpolyole kommen zum Aufbau der erfindungsgemäßen Prepolymere der Komponente b) in Betracht. Polycarbonatpolyole können bekanntlich aus der Kondensationsreaktion von Phosgen mit Polyolen oder der Umesterung geeigneter organischer Carbonate mit Polyolen erhalten werden. Als organische Carbonate kommen Aryl- Alkyl- Alkylencarbonate und deren Mischungen in Betracht. Als Beispiele seien Diphenylcarbonat (DPC), Dimethylcarbonat (DMC), Diethylcarbonat (DEC) und Ethylencarbonat genannt. Als Polyole kommem die oben unter dem Abschnitt Polyesterpolyole genannten in Betracht. Die Funktionalität der eingesetzten Polycarbonatpolyole beträgt bevorzugt 1,6 bis 3,8, besonders bevorzugt 1,8 bis 3,5. Diese Polycarbonatpolyole haben ein zahlenmittleres Molgewicht von bevorzugt 100 bis 6000 g/mol und besonders bevorzugt von 100 bis 4000 g/mol. Die OH-Zahl ist von der Funktionalität der Polycarbonatpolyole abhängig und beträgt typischerweise 20 bis 900 mg KOH/g.

Besonders bevorzugte Verbindungen der Formel (III) sind 6-Isocyanatocapronsäurechlorid, 11-Isocyanatoundecansäurechlorid, sowie o-, m- oder p-Isocyanatobenzoylchlorid. Besonders bevorzugte Verbindungen der Formel (IV) sind 2-Chlorcarbamoyl-ethylamino-4-isocyanatotoluol und 4-Chlorcarbamoyl-ethylamino-2-isocyanatotoluol.

Die Herstellung der erfindungsgemäßen Polyurethanprepolymere erfolgt grundsätzlich in aus der Polyurethanchemie bekannter Art und Weise. Dabei werden die Polyole der Komponente b) (einzeln oder als Mischung) mit einem Überschuß der Isocyanatkomponente a) (einzeln oder als Mischung) und mindestens einem Halogenid der Komponente c) gegebenenfalls in Anwesenheit eines Katalysators und/oder von Hilfs- und Zusatzstoffen umgesetzt. Das homogene Reaktionsgemisch wird bis zum Erhalt eines konstanten NCO-Wertes gerührt. Anschließend kann gegebenenfalls unreagiertes Polyisocyanat durch kontinuierliche Destillation entfernt werden.

Die Komponenten a), b) und c) können, wie zunächst oben beschrieben, in einem einzigen Reaktionsschritt umgesetzt werden. Es ist aber auch möglich, zunächst das Halogenid der Komponente c) mit dem Polyol oder dem Polyolgemisch der Komponente b) umzusetzen und dann in einem weiteren Reaktionsschritt die Isocyanatkomponente im Überschuss zuzusetzen.

Unter einem kontinuierlichem Destillationsverfahren im Sinne der Erfindung wird ein Verfahren verstanden, bei dem nur eine jeweilige Teilmenge des Prepolymers aus dem Verfahrensschritt I) kurzzeitig einer erhöhten Temperatur ausgesetzt wird, während die noch nicht im Destillationsprozess befindliche Menge bei einer deutlich niedrigeren Temperatur verbleibt. Als erhöhte Temperatur ist dabei die zur Verdampfung der flüchtigen Bestandteile bei einem entsprechend gewählten Druck zu verstehen.

Bevorzugt wird die Destillation bei einer Temperatur von weniger als 170°C, besonders bevorzugt 110 bis 170°C, ganz besonders bevorzugt 125 bis 145°C und bei Drücken von weniger als 20 mbar, besonders bevorzugt weniger als 10 mbar, ganz besonders bevorzugt bei 0,05 bis 5 mbar durchgeführt.

Bevorzugt beträgt die Temperatur der noch nicht im Destillationsprozess befindliche Menge der prepolymerhaltigen Reaktionsmischung 0 bis 60°C, besonders bevorzugt 15 bis 40°C und ganz besonders bevorzugt 20 bis 40°C.

In einer bevorzugten Ausführungsform der Erfindung beträgt der Temperaturunterschied zwischen der Destillationstemperatur und der Temperatur der noch nicht im Destillationsprozess befindlichen Menge der prepolymerhaltigen Reaktionsmischung mindestens 5°C, besonders bevorzugt mindestens 15°C, ganz besonders bevorzugt 15 bis 40°C.

Bevorzugt wird die Destillation mit solch einer Geschwindigkeit geführt, dass ein Volumeninkrement der zu destillierenden prepolymerhaltigen Reaktionsmischung weniger als 10 min besonders bevorzugt weniger als 5 min der Destillationstemperatur ausgesetzt wird und anschließend gegebenenfalls durch aktive Kühlung wieder auf die Ausgangstemperatur der prepolymerhaltigen Reaktionsmischung vor der Destillation gebracht wird. Bevorzugt ist die dabei durchlaufene Temperaturbelastung derart, dass die Temperatur der Reaktionsmischung vor der Destillation bzw. des Prepolymers nach der Destillation gegenüber der angewandten Destillationstemperatur mindestens 5°C, besonders bevorzugt mindestens 15°C, ganz besonders bevorzugt 15 bis 40°C höher ist.

Bevorzugte kontinuierliche Destillationstechniken sind die Kurzweg-, Fallfilm- und/oder Dünnschichtdestillation (siehe hierzu beispielsweise Chemische Technik, Wiley-VCH, Band 1, 5. Auflage, Seiten 333-334).

Fallfilmverdampfer bestehen aus einem stehenden Bündel langer Rohre, in denen die zu verdampfende Flüssigkeit oben aufgegeben wird und als Film hinunterströmt. Im Mantelraum erfolgt die Beheizung durch Dampf. In den Rohren bilden sich Dampfblasen, die mit der Flüssigkeit abwärts strömen und für turbulente Bedingungen sorgen. Dampf und Flüssigkeit trennen sich am unteren Ende in einem Abscheidegefäß.

Dünnschichtverdampfer sind geeignete Apparate zur Verdampfung temperaturempfindlicher Stoffe, die nur kurzzeitig thermisch belastet werden dürfen. Die zu verdampfende Flüssigkeit wird oben in ein Rohr mit Mantelbeheizung aufgegeben. Sie strömt dort als Film herunter. Im Innern des Rohres rotiert ein an einer Welle aufgehängter Wischer und sorgt für eine konstante Filmdicke.

Bevorzugt wird als kontinuierliche Destillationstechnik die Dünnschichtdestillation mit den vorstehend genannten Parametern eingesetzt.

Bevorzugt beträgt das Äquivalentverhältnis der NCO-Gruppen der Komponente a) zu den OH-Gruppen der Komponente b) bei der Umsetzung 10:1 bis 2:1, besonders bevorzugt 7:1 bis 3:1.

Als Reaktionstemperatur werden 0°C bis 250°C, vorzugsweise 20°C bis 140°C, ganz besonders bevorzugt 40°C bis 100°C gewählt.

Bevorzugt sind die Reaktionspartner wie auch das Reaktionsprodukt bei der gewählten Reaktionstemperatur flüssig, so dass auf die Verwendung zusätzlicher Lösemittel zur Homogenisierung und Viskositätserniedrigung der Reaktionsmischung verzichtet werden kann. Selbstverständlich kann des erfindungsgemäße Verfahren auch in Gegenwart von Lösungsmitteln wie Aromaten, chlorierten Aromaten, Ester oder chlorierten KW'S durchgeführt werden.

Zur Beschleunigung der Urethanisierung können die an sich bekannten Katalysatoren wie Organometallverbindungen, Amine (z.B. tertiäre Amine) oder Metallverbindungen wie Bleioctoat, Quecksilbersuccinat, Zinnoctoat oder Dibutylzinndilaurat verwendet werden. Falls Katalysatoren mit verwendet werden, werden diese vorzugsweise in Mengen von 0,001 bis 5 Gew.-%, insbesondere 0,002 bis 2 Gew.-% bezogen auf die Gesamtmenge der umzusetzenden Komponenten a) und b) zugesetzt.

Bevorzugt werden metallorganische Verbindungen eingesetzt, besonders bevorzugt metallorganische Katalysatoren aus der Gruppe der Zinn(IV)-Verbindungen.

Besonders bevorzugte Katalysatoren aus der Gruppe der Zinn(IV)-Verbindungen sind Dibutyl- und Dioctylzinndiacetat, -maleat, -bis-(2-ethylhexoat), -dilaurat, -dichlorid, -bisdodecylmercaptid, Tributylzinnacetat, Bis(β-methoxycarbonyl-ethyl)zinndilaurat und Bis(β-acetyl-ethyl)zinndilaurat.

Ganz besonders bevorzugt ist Dibutylzinndilaurat als metallorganischer Katalysator.

Dem Reaktionsgemisch können Antioxidantien bevorzugt aus der Gruppe der sterisch gehinderten Phenole oder Phosphorigsäureester zugesetzt werden.

Ein weiterer Gegenstand der Erfindung ist die Verwendung der erfindungsgemäßen Prepolymere zur Herstellung von Polyurethankunststoffen, Lacken, Beschichtungen, Klebstoffen oder Dichtstoffen.

Dichtstoffe, Klebstoffe, Lacke und Beschichtungsmassen auf Basis der erfindungsgemäßen Prepolymere können in vielfältiger Weise eingesetzt werden. Sie können in breitem Umfang zum Beschichten, Verbinden und Abdichten von Werkstoffen beispielsweise aus Metall, Keramik, Glas, Kunststoff, Holz, Beton und anderen Baustoffen oder Naturstoffen verwendet werden. Dabei können die genannten Substrate gegebenenfalls zuvor einer notwendigen Vorbehandlung unterzogen worden sein.

Ein weiterer Gegenstand der Erfindung sind daher Substrate versehen mit Beschichtungen erhältlich unter Verwendung der erfindungsgemäßen Prepolymere.

### Beispiele

Sofern nicht anders angegeben, beziehen sich alle Prozentangaben auf das Gewicht.

Die NCO-Gehalte wurden mittels Rücktittration von im Überschuß zugesetztem Dibutylamin mit Salzsäure bestimmt.

Die Viskositätsmessung erfolgte mit einem Rotationsviskosimeter der Firma Haake bei 23°C.

### Beispiel 1

Man legte 383,4 g 2,4-TDI und 19 mg Isocyanatocapronsäurechlorid bei 80°C vor und gab die Mischung aus 485,6 g Polypropylenglykol mit einer Molmasse von 2000 g/mol und einer theoretischen OH-Funktionalität von 2 und 131,0 g Polypropylenglykol mit einer Molmasse von 1000 g/mol und einer theoretischen OH-Funktionalität innerhalb von 2 h hinzu. Es wurde gerührt, bis der NCO-Gehalt 15,4 % betrug. Dann wurde in einem Dünnschichtverdampfer bei einem Vakuum von 0,1 mbar und einer Temperatur von 140°C das überschüssige TDI abgetrennt.

Die Viskosität des Prepolymeren betrug 6760 mPas und blieb nach 5 Wochen Lagerung bei 23°C unverändert. Der NCO-Gehalt des Prepolymeren betrug 4,48 % und fiel nach 5 Wochen Lagerung auf 4,40 %.

### Beispiel 2

Man verfuhr, wie in Beispiel 1 beschrieben, wobei jedoch statt Isocyanatecapronsäurechlorid die gleiche Menge ETS-Chlorid eingesetzt wurde, ein Gemisch aus 2-Chlorcarbamoyl-ethylamino-4-isocyanatotoluol und 4-CWorcarbamoyl-ethylamino-2-isocyanato-toluol.

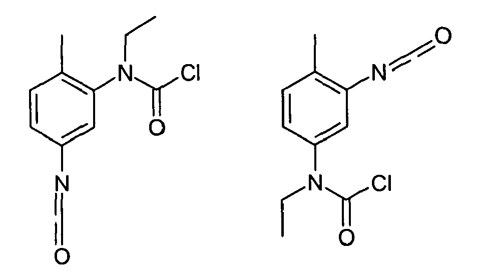

Die Viskosität des Prepolymeren betrug 7090 mPas und stieg nach 5 Wochen Lagerung bei 23°C auf 7750 mPas. Der NCO-Gehalt des Prepolymeren betrug 4,36 % und blieb nach 5 Wochen Lagerung unverändert.

### (Vergleichs-) Beispiel 3

Man verfuhr, wie in Beispiel 1 beschrieben, wobei jedoch statt Isocyanatocapronsäurechlorid die gleiche Menge Titantetrachlorid eingesetzt wurde.

Die Viskosität des Prepolymeren betrug 6840 mPas und stieg nach 5 Wochen Lagerung bei 23°C auf 7040 mPas. Der NCO-Gehalt des Prepolymeren betrug 4,42 % und blieb nach 5 Wochen Lagerung unverändert.

### (Vergleichs-) Beispiel 4

Man verfuhr, wie in Beispiel 1 beschrieben, wobei jedoch statt Isocyanatocapronsäurechlorid die gleiche Menge Benzoylchlorid eingesetzt wurde.

Die Viskosität des Prepolymeren betrug 7030 mPas und stieg schon in einer Woche auf 16100 mPas. Der NCO-Gehalt des Prepolymeren betrug 4,42% und fiel schon in einer Woche auf 3,73%.

| Eingesetztes Chlorid | Viskosität [mPas] | | NCO-Gehalt [%] | |
|---|---|---|---|---|
| | Beginn der Messung | nach 5 Wochen | Beginn der Messung | nach 5 Wochen |
| Bsp. 1 | 6760 | 6760 | 4,48 | 4,40 |
| Isocaynatocapronsäurechlorid | | | | |
| Bsp. 2 | 7090 | 7750 | 4,36 | 4,36 |
| ETS-Clorid (Carbamoylchlorid) | | | | |
| Vgl.-Bsp. 3 Titantetrachlorid | 6840 | 7040 | 4,42 | 4,42 |
| Vgl.-Bsp. 4 Benzoylchlorid | 7030 | 16100 | 4,42 | 3,73 |

Während der NCO-Gehalt bei den Beispielen 1-3 konstant, bzw. nahezu konstant bleibt, zeigt sich unter Verwendung von Benzoylchlorid als Stabilisator ein deutlicher Verlust an freien NCO-Gruppen. Ebenso ist hier ein enormer Viskositätsanstieg von etwa 9000 mPas zu verbuchen, während die Viskosität unter Verwendung des Carbonsäurechlorids konstant bleibt, bzw. unter Verwendung des Carbamoylchlorids lediglich um 660 mPas ansteigt. Die erfindungsgemäßen Prepolymere zeigen im Besonderen hinsichtlich der Viskosität eine weitaus höhere Lagerstabilität.

## Patentansprüche

1. Isocyanat-funktionelle Prepolymere enthaltend wenigstens eine Struktureinheit der allgemeinen Formel (I) oder (II) 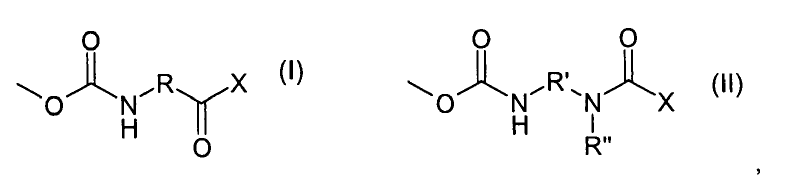 wobei
R und R' unabhängig voneinander ein C₁- bis C₁₂-Alkylen-, ein C₅- bis C₁₂-Cycloalkylen- oder ein ggf. heteroatomhaltiger, aromatischer Kohlenwasserstoffrest mit 6 bis 22 C-Atomen sind,
R" ein C₁- bis C₁₂-Alkyl-, ein C₅- bis C₁₂-Cycloalkyl- oder ein ggf. heteroatomhaltiger, aromatischer Kohlenwasserstoffrest mit 6 bis 22 C-Atomen ist, und
X ein Halogenatom ist.

2. Isocyanat-funk-tionelle Prepolymere gemäß Anspruch 1, bei denen R und R' jeweils ein o-, m oder p-Phenylenrest, ein 1,5-Pentylenrest oder ein 2,4- oder 2,6-Toluylenrest sind, R" ein C₁ bis C₄-Alkylrest ist und X = Cl ist.

3. Verfahren zur Herstellung isocyanat-funktioneller Prepolymere gemäß Anspruch 1, **dadurch gekennzeichnet, dass**
a) ein oder mehrere Polyisocyanate mit
b) einem oder mehreren Polyolen in Anwesenheit von
c) wenigstens einem Isocyanatocarbonsäure- oder Isocyanatocarbamoylhalogenid der allgemeinen Formel (III) bzw. (IV) 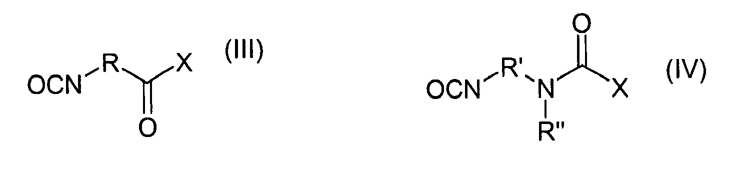
umgesetzt werden,
wobei
R und R' unabhängig voneinander ein C₁- bis C₁₂-Alkylen-, ein C₅- bis C₁₂-Cycloalkylen- oder ein ggf. heteroatomhaltiger, aromatischer Kohlenwasserstoffrest mit 6 bis 22 C-Atomen sind,
R" ein C₁- bis C₁₂-Alkyl-, ein C₅- bis C₁₂-Cycloalkyl-, oder ein ggf. heteroatomhaltiger, aromatischer Kohlenwasserstoffrest mit 6 bis 22 C-Atomen ist, und
X ein Halogenatom ist.

4. Verfahren gemäß Anspruch 3, **dadurch gekennzeichnet, dass** R und R' jeweils ein o-, m oder p-Phenylenrest, ein 1,5-Pentylenrest oder ein 2,4- oder 2,6-Toluylenrest sind, R" ein C₁ bis C₄-Alkylrest ist und X = Cl ist.

5. Verfahren gemäß Anspruch 3 oder 4, **dadurch gekennzeichnet, dass** in Komponente a) Polyisocyanate auf Basis von Hexamethylendiisocyanat, Isophorondiisocyanat, den isomeren Bis-(4,4'-isocyanatocyclohexyl)methanen, TDI, MDI, oder deren Mischungen eingesetzt werden.

6. Verfahren gemäß einem der Ansprüche 3 bis 5, **dadurch gekennzeichnet, dass** in Komponente b) Polyole auf Polyetherbasis eingesetzt werden.

7. Verfahren gemäß einem der Ansprüche 3 bis 6, **dadurch gekennzeichnet, dass** als Isocyanatocarbonsäurehalogenide in Komponente c) 6-Isocyanatocapronsäurechlorid, 11- Isocyanatoundecansäurechlorid, oder o-, m- oder p-Isocyanatobenzoylchlorid eingesetzt werden.

8. Verfahren gemäß einem der Ansprüche 3 bis 6, **dadurch gekennzeichnet, dass** als Isocyanatocarbamoylhalogenide in Komponente c) 2-Chlorcarbamoyl-ethylamino-4-isocyanatotoluol oder 4-Chlorcarbamoyl-ethylamino-2-isocyanatotoluol eingesetzt werden.

9. Verfahren gemäß einem der Ansprüche 3 bis 8, **dadurch gekennzeichnet, dass** das Äqiuvalentverhältnis der NCO-Gruppen der Komponente a) zu den OH-Gruppen der Komponente b) 7:1 bis 3:1 beträgt.

10. Verwendung isocyanat-funktioneller Prepolymere gemäß Anspruch 1 oder 2 zur Herstellung von Polyurethankunststoffen, Lacken, Beschichtungen, Klebstoffen oder Dichtstoffen.

11. Substrate versehen mit Beschichtungen erhältlich unter Verwendung isocyanat-funktioneller Prepolymere gemäß Anspruch 1 oder 2.
